# EUROPÄISCHE PATENTSCHRIFT

(11) **EP 1 099 010 B1**
(45) Veröffentlichungstag und Bekanntmachung des Hinweises auf die Patenterteilung: **19.11.2003**
(21) Anmeldenummer: 99939935.5
(22) Anmeldetag: 23.06.1999
(51) Int. Cl.: C23F 1/44, C23F 1/46, C22B 11/08, C25C 1/20

(54) **VERFAHREN ZUR RÜCKGEWINNUNG VON EDELMETALLEN**
METHOD FOR RECOVERING PRECIOUS METALS
PROCEDE DE RECUPERATION DE METAUX PRECIEUX

(30) Priorität: 01.07.1998 DE 19829274
(43) Veröffentlichungstag der Anmeldung: 16.05.2001
(73) Patentinhaber: OTB Oberflächentechnik in Berlin GmbH & Co., 12277 Berlin (DE)
(72) Erfinder: HERRMANN, Sigrid, D-12487 Berlin (DE); LANDAU, Uwe, D-14169 Berlin (DE)
(74) Vertreter: Tilger, Bernhard
(86) Internationale Anmeldenummer: DE9901827
(87) Internationale Veröffentlichungsnummer: WO00001863

(56) Entgegenhaltungen:
- EP-A- 0 249 316
- DE-B- 1 264 920
- DE-C- 85 239
- US-A- 3 242 090
- US-A- 3 935 005
- US-A- 4 548 791
- US-A- 4 652 351
- US-A- 5 667 557
- BRANDON N. P.: "The direct electrowinning of god from dilute cyanide leach liquors" HYDROMETALLURGY., Bd. 18, Nr. 3, 1. August 1987 (1987-08-01), Seiten 305--319, XP002130450 ELSEVIER SCIENTIFIC PUBLISHING CY. AMSTERDAM., NL ISSN: 0304-386X
- PATENT ABSTRACTS OF JAPAN vol. 007, no. 039 (C-151), 17. Februar 1983 (1983-02-17) & JP 57 188690 A (NIPPON DENKI KK), 19. November 1982 (1982-11-19)

## Beschreibung

Die vorliegende Erfindung betrifft ein Verfahren zur Rückgewinnung von Edelmetallen, insbesondere Gold, Silber und/oder Palladium, von entsprechend beschichtetem Material. Sie betrifft insbesondere ein Verfahren zum Ablösen entsprechender Edelmetallschichten durch eine ein Oxidationsmittel umfassende salzhaltige Alkalicyanidlösung und ein Verfahren zur elektrolytischen Abscheidung der gelösten Edelmetalle. Die Erfindung betrifft zudem ein Verfahren zur elektrolytischen Regeneration einer zum Ablösen der Edelmetallschichten eingesetzten Alkalicyanidlösung.

In der Elektronikindustrie, der Elektrotechnik und bei der Schmuckwarenfertigung werden Edelmetalle in vielfältiger Weise zur Beschichtung von Kontakten, Drähten, Leiterplatten, Schmuckstücken oder dergleichen verwendet. Hierbei fallen stets auch Teile an, die den technischen Anforderungen nicht genügen und aussortiert werden. Von diesen Teilen möchte man insbesondere die Edelmetalle aus wirtschaftlichen Gründen möglichst schnell, kostengünstig und unproblematisch zurückgewinnen und einer Wiederverwendung zuführen, so daß ein großes Interesse an entsprechenden Rückgewinnungsverfahren besteht.

Dieses Interesse wird noch dadurch verstärkt, daß in den letzten Jahren in zunehmendem Maße auch veraltete, dem technischen Stand nicht mehr entsprechende elektronische Geräte aller Art ausgemustert und gezielt zerlegt werden, um aus dem anfallenden Schrott die wirtschaftlich interessanten Materialien, wie z.B. die zur Beschichtung eingesetzten Edelmetalle, für eine spätere Nutzung zurückzugewinnen.

Da die Schichtstärken der eingesetzten Edelmetalle, wie z.B. Gold, Silber, Palladium oder dergleichen, aus wirtschaftlichen Gründen naturgemäß möglichst dünn gewählt werden, ist der Edelmetallgehalt des zur Rückgewinnung vorgesehenen Materials mit 0,1 - 1 % entsprechend gering. Das Material besteht somit üblicherweise im wesentlichen aus einem unedlen Grundmetall, das bei der Rückgewinnung der Edelmetalle sinnvollerweise in metallischer Form beibehalten wird, da ansonsten die Aufarbeitungskosten in keinem Verhältnis zu dem mit der Rückgewinnung verbundenen Nutzen stehen.

Im Stand der Technik werden die Edelmetallschichten daher üblicherweise mittels eines naßchemischen Verfahrens von dem jeweiligen Grundmetall abgelöst und anschließend beispielsweise durch ein elektrolytisches Verfahren aus der Lösung zurückgewonnen. Das Unedelmetall hingegen wird einfach eingeschmolzen und weiterverarbeitet.

Die zum Ablösen der Edelmetallschichten verwendeten Verfahren basieren auf der Gewinnung von Edelmetallen aus Erzen, wobei überwiegend Alkalicyanidlösungen eingesetzt werden, denen ein geeignetes Oxidationsmittel zugesetzt wird.

Zum Ablösen von Gold- und/oder Silberschichten von oberflächenbeschichtetem Material wird beispielsweise Wasserstoffperoxid als Oxidationsmittel in einer Natriumcyanidlösung eingesezt (Gmelin, Syst. Nr. 62, Verlag Chemie, Weinheim; Gold als Oberfläche, Eugen G. Lenze, S. 181, Saulgau, 1982). Bedingt durch das Lösen von Fremdmetallen und eine Zersetzung durch Luft und Wasserstoffperoxid ist der Gesamtverbrauch an Cyanid jedoch recht hoch. Das Cyanid wird durch das Wasserstoffperoxid aufoxidiert, was beim Anwachsen der Schwermetallkonzentration unkontrolliert und teilweise sogar explosionsartig erfolgen kann.

Ähnliche Nachteile zeigen cyanidische Lösungen, denen zum Ablösen von Edelmetallen von oberf lächenbeschichtetem Material Alkalipersulfate oder Alkaliperoxoborate zugesetzt werden. Zudem zersetzt das Oxidationsmittel große Anteile des in der Lösung enthaltenen Cyanids, so daß die Lösungen, ähnlich wie die Alkalicyanidlösungen mit Wasserstoffperoxid, nicht stabil sind.

Beide Verfahren arbeiten auch nur bedingt wirschaftlich, da zum einen das Oxidationsmittel ständig verbraucht wird, und da zum anderen für die Lösungen nach dem Abtrennen des Edelmetalls ein hoher Entsorgungsaufwand erforderlich ist.

Eine andere Möglichkeit besteht darin, den Alkalicyanidlösungen aromatische Nitroverbindungen als Oxidationsmittel zuzusetzen. Hierbei werden vorzugsweise m-Nitroverbindungen oder p-Nitroverbindungen eingesetzt, da sie das höchste Oxidationspotential besitzen. Zu den nitrosubstituierten Aromaten, die als Oxidationsmittel eingesetzt werden, zählen Nitrobenzolsulfonsäure, Nitrobenzoesäure, Nitrobenzaldehyd, Nitroanilin, Nitrochlorbenzol, Nitrophenol und die löslichen Natrium-, Kalium- und Ammoniumsalze (US-PS-3 242 040).

Durch diese Lösungen lassen sich Gold- und Silberschichten von Nickeloberflächen unter geringer Einwirkung auf die Oberfläche ablösen, während Kupferoberflächen verstärkt angegriffen werden. Um den Angriff des Grundmetalls zu verhindern, werden an Stelle von Alkalicyaniden Cyanidkomplexe des Zinks oder Cadmiums zugesetzt, die sehr schnell ihre Cyanidionen abgeben. Das Zink bzw. das Cadmium bildet auf der Kupferoberf läche eine Schutzschicht und verringert damit das Inlösunggehen des Kupfers. Die bevorzugte Lösung enthält etwa 25 g/l Natriumzinkcyanid, 30 g/l Nitrobenzolsulfonsäure und 5 g/l Natriumhydroxid. Die optimale Arbeitstemperatur liegt bei 60 °C.

Auch dieses Verfahren ist nicht sonderlich wirtschaftlich, da das Oxidationsmittel ständig verbraucht wird. So werden zum Ablösen von 1 g Gold etwa 2 - 3 g Nitroaromat verbraucht. Die Lösung kann bis zu einer Goldkonzentration von 15 - 17 g/l angereichert werden, wenn der Nitroaromat und das Natriumcyanid nachgesetzt werden.

Nach dem Verbrauch des Oxidationsmittels und des am Zink gebundenen Cyanids muß aus der Lösung das Gold abgetrennt und die Restlösung mit entsprechend hohem Aufwand entsorgt werden, was sich wiederum nachteilig auf die Wirtschaftlichkeit des Verfahrens auswirkt. Zur Minimierung des Entsorgungsproblems werden handelsüblichen Lösungen Alkalicyanid, Zinkcyanid und Bleicyanid zugesetzt (Degussa, Edelmetall-Taschenbuch, S. 33, Heidelberg, 1995).

Aus dem amerikanischen Patent 4,652,351 ist ein Verfahren zur elektrolytischen Abscheidung von Metallen, wie Kadmium, Zink, Nickel, Kupfer, Zinn oder dergleichen, aus einer Alkalicyanid-Stripperlösung bekannt, bei dem die metallhaltige Lösung durch den Kathodenraum einer Elektrolysezelle geleitet wird, der von dem mit einem starken Elektrolyten gefüllten zugehörigen Anodenraum durch eine Kationenaustauschermembran getrennt ist.

Das amerikanische Patent 5,667,557 offenbart die elektrolytische Abscheidung von Kupfer aus einer Alkalicyanidlösung im Kathodenraum einer Elektrolysezelle, der von dem mit einer 15 %-igen NaOH-Lösung gefüllten zugehörigen Anodenraum durch eine Kationenaustauschermembran getrennt ist. Gemeinsam mit dem Kupfer werden auch geringe Mengen an Gold und Silber abgeschieden.

Die US-A-4 652 351 offenbart ein Verfahren zum Regenerieren verbrauchter Alkalicyanid-Stripperlösungen durch Abscheiden zuvor abgelöster Metalle, wie z.B. Cadmium, Kupfer, Nickel, Zinn oder Zink, im Kathodenraum einer Elektrolysezelle. Durch die Verringerung des Metallgehaltes der Stripperlösungen sind diese für ein mehrfaches Ablösen von Metallen nutzbar.

Die US-A- 3 935 005 offenbart ein Verfahren zum Ablösen von Gold oder Silber von einem Substrat durch Lösen der Metalle in einer ein Oxidationsmittel, insbesondere ein substituiertes Nitrobenzen, umfassenden salzhaltigen Alkalicyanidlösung.

Aus der JP-A-9 087 882 ist ein Verfahren zur Herstellung goldbeschichteter Kationenaustauschermembranen bekannt. Eine Verwendungsmöglichkeit für solche Membranen ist diesem Dokument jedoch nicht zu entnehmen.

Die Aufgabe der vorliegenden Erfindung besteht in der Schaffung eines Verfahrens, das es ermöglicht, Edelmetalle, insbesondere Gold, Silber und/oder Palladium, von entsprechend beschichtetem Material mit minimalem Chemikalien- und Entsorgungsaufwand in kurzer Zeit kostengünstig zurückzugewinnen. Die Aufgabe besteht insbesondere in der Schaffung eines sowohl unter ökonomischen als auch unter ökologischen Gesichtspunkten verbesserten Verfahrens zum Ablösen der Edelmetalle durch eine ein Oxidationsmittel umfassende Alkalicyanidlösung und in der Schaffung eines verbesserten Verfahrens zur elektrolytischen Abscheidung der gelösten Edelmetalle. Die Aufgabe besteht zudem in der Schaffung eines Regenerationsverfahrens für die verwendete Alkalicyanidlösung.

Der erste Teil der Aufgabe wird erfindungsgemaß dadurch gelöst, daß eine zum Ablösen von Edelmetallschichten verwendete salzhaltige Alkalicyanidlösung, die als Oxidationsmittel vorzugsweise zumindest ein Alkalisulfat, ein Alkalimetaborat und/oder einen Nitroaromaten umfaßt, zur Gewinnung und/oder Regeneration des Oxidationsmittels in zumindest einer Elektrolysezelle elektrolytisch auf oxidiert wird.

Der erste Teil der Aufgabe wird gelöst durch ein Verfahren wie definiert in Anspruch 1. Die Zeilaufgabe zur Schaffung eines Regenerationsverfahrens für die verwendete Alkalicyanidlösung wird durch ein Verfahren gemäß Anspruch 44 gelöst.

Der Zeil der Aufgabe zur Schaffung einer verbesserten elektrolytischen Abscheidung der gelösten Edelmetalle wird durch ein Verfahren gemäß Anspruch 34 gelöst.

Beim Einsatz von Alkalisulfat und/oder Alkalimetaborat bilden sich bei der Aufoxidation geringe Anteile an Alkalipersulfat bzw. Alkaliperborat, die als Oxidationsmittel zum Ablösen der Edelmetalle eingesetzt werden. Da die Alkaliverbindungen hierbei reduziert werden, wird die Alkalicyanidlösung durch anschließende elektrolytische Aufoxidation wieder regeneriert, so daß sie erneut zum Lösen der Edelmetalle einsetzbar ist. Dieses Verfahren erfolgt in geschlossenem Kreislauf, so daß man im Unterschied zum Stand der Technik, bei dem die zum Ablösen eingesetzte Alkalicyanidlösung nach Gebrauch aufwendig entsorgt werden muß, mit einem minimalen Chemikalieneinsatz und einem entsprechend geringen Entsorgungsaufwand auskommt.

Bei Verwendung von Nitroaromaten hingegen umfaßt die Alkalicyanidlösung das Oxidationsmittel bereits, so daß es nicht erst elektrolytisch gebildet werden muß. In diesem Fall dient die erfindungsgemäße elektrolytische Aufoxidation lediglich zur Regeneration der Nitroaromaten, die beim Ablöseprozeß ebenfalls reduziert und in Nitrosoverbindungen umgewandelt werden, so daß auch hier der bisher übliche Entsorgungsaufwand entfällt und die regenerierte Lösung wieder zum Ablösen der Edelmetalle verwendbar ist.

Da Nitroaromaten in cyanidischen Lösungen im Gegensatz zu Alkalisulfaten oder Alkalimetaboraten stabil sind, kann diese elektrolytische Regeneration einer einen Nitroaromaten umfassenden verbrauchten Alkalicyanidlösung auch unabhängig von dem Löseprozeß in einer externen Elektrolyseeinrichtung erfolgen, so daß in diesem Fall eine Arbeitsweise in geschlossenem Kreislauf, obgleich diese durch die Einsparung von Transport- und Lagerkosten Vorteile aufweist, nicht unbedingt erforderlich ist.

Die Alkalicyanidlösung umfaßt vorzugsweise 10 - 60 g/l, insbesondere jedoch 10 - 20 g/l Alkalicyanid und 8 - 25 g/l des zumindest einen Alkalisulfats, Alkalimetaborats oder Nitroaromaten.

Der zumindest eine Nitroaromat wiederum umfaßt vorzugsweise Nitrobenzoesäure, Nitrobenzolsulfonsäure, Nitrochlorbenzol, Nitroanilin, Nitrophenol, Nitrophthalsäure oder Nitrotoluolsulfonsäure.

Als Alkaliverbindungen erweisen sich insbesondere Verbindungen des Natriums oder Kaliums als vorteilhaft.

Bei einer speziellen Verfahrensvariante wird der Cyanidgehalt der Alkalicyanidlösung, deren pH-Wert vorzugsweise so eingestellt wird, daß er größer etwa gleich 11 ist, durch entsprechenden Zusatz von Alkalicyanid aufrechterhalten.

Die Zusammensetzung der Alkalicyanidlösung kann hierbei so gewählt werden, daß die Edelmetalle selektiv abgelöst werden. Zur Verbesserung bzw. gezielten Steuerung des Ablöseverhaltens können auch mehrere unterschiedliche Oxidationsmittel gleichzeitig eingesetzt werden.

Die elektrolytische Aufoxidation der zum Lösen der Edelmetalle eingesetzten Alkalicyanidlösung erfolgt im Anodenraum zumindest einer Elektrolysezelle, durch den die Alkalicyanidlösung vorzugsweise mit einer Temperatur von 20 - 30 °C und einer Strömungsgeschwindigkeit von 1 - 3 l/min geleitet wird. Der Anodenraum der Elektrolysezelle ist hierbei von dem mit einem starken Elektrolyten, insbesondere 10 %-iger Kali- oder Natronlauge, gefüllten zugehörigen Kathodenraum durch eine Kationenaustauschermembran getrennt. Als Anode wird vorzugsweise eine Platinanode verwendet, während die Kathode aus nichtrostendem Stahl besteht. Bei Verwendung von Nitroaromaten beträgt die Stromdichte vorzugsweise 5 - 50 A/dm², während bei Verwendung von Alkalisulfaten und/oder Alkalimetaboraten vorzugsweise Stromdichten von 15 - 30 A/dm³ eingesetzt werden.

Die in der Alkalicyanidlösung gelösten Edelmetalle werden vorzugsweise elektrolytisch abgeschieden und einer anschließenden Wiederverwendung zugeführt. Die Alkalicyanidlösung wird hierzu mit einer gewissen Strömungsgeschwindigkeit, die vorzugsweise 1 - 3 l/min beträgt, kontinuierlich durch den Kathodenraum zumindest einer weiteren Elektrolysezelle geleitet, der von dem zugehörigen Anodenraum durch eine Kationenaustauschermembran getrennt ist. Der Anodenraum der Zelle ist mit einem starken Elektrolyten, wie Z.B. 10 %-ige Kali- oder Natronlauge, gefüllt, dessen Konzentration vorzugsweise durch Zugabe einer entsprechend konzentrierten Lösung gleicher Art aufrechterhalten wird. Als Kathode erweist sich insbesondere ein Stab oder ein schmales Blech aus Titan als vorteilhaft, während als Anode insbesondere ein nichtrostendes Stahlblech eingesetzt wird. Die Edelmetalle werden vorzugsweise in Pulverform abgeschieden, wobei die Stromdichten 5 - 20 A/dm² betragen.

Da bevorzugt Gold abgeschieden wird, ist es möglich, die Elektrolyse bis zu einer Konzentration von 1 g/l, die durch Potentialmessungen überprüft wird, zu fahren und das restliche Gold bei niedriger Stromdichte auszuelektrolysieren. Mit dieser Verfahrensvariante können die Verunreinigungen im abgeschiedenen Gold auf ≤ 2 % gedrückt werden.

Als besonders vorteilhaft erweist sich jedoch die Verwendung einer mit Edelmetall, insbesondere Gold, beschichteten Kationenaustauschermembran, da sich hierdurch z.B. Gold mit einer Reinheit von bis zu 99 % abscheiden läßt.

Weitere Merkmale und Vorteile der vorliegenden Erfindung ergeben sich nicht nur aus den zugehörigen Ansprüchen - für sich und/oder in Kombination - sondern auch aus der nachfolgenden Beschreibung bevorzugter Ausführungsbeispiele in Verbindung mit den zugehörigen Zeichnungen. Die Zeichnungen, in denen gleiche Bauteile mit gleichen Bezugszeichen versehen sind, zeigen in schematischer Darstellung:
- Fig. 1: ein erstes Ausführungsbeispiel eines erfindungsgemäßen Rückgewinnungsverfahrens und
- Fig. 2: ein weiteres Ausführungsbeispiel eines erfindungsgemäßen Rückgewinnungsverfahrens.

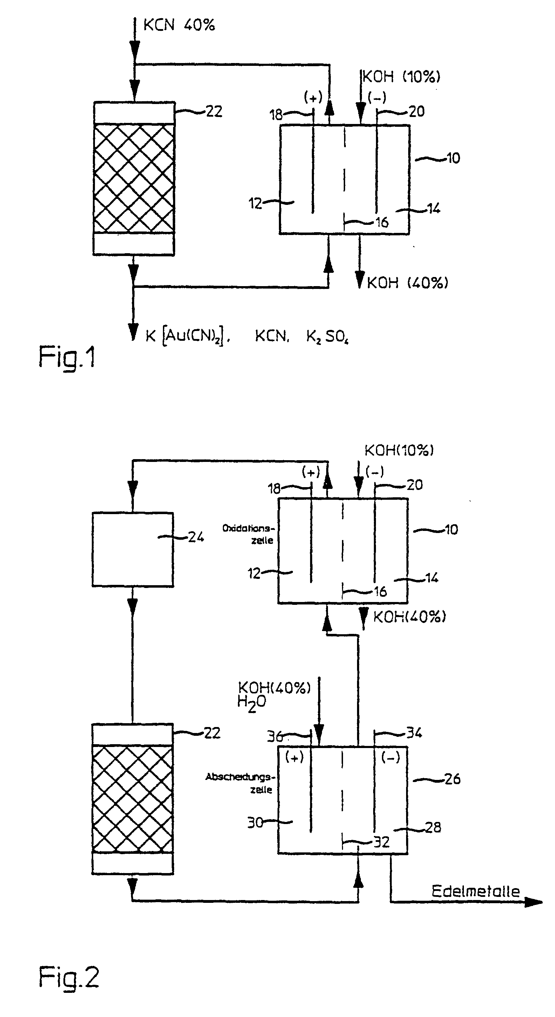

Fig. 1 zeigt eine Elektrolysezelle 10 mit einem Anodenraum 12, der von dem zugehörigen Kathodenraum 14 durch eine Kationenaustauschermembran 16 getrennt ist. Als Anode 18 dient eine Platinelektrode, während die Kathode 20 aus nichtrostendem Stahl besteht.

Der Kathodenraum 14 ist mit 10 %-iger Kalilauge gefüllt, wobei durch Überführung von Kaliumionen im Laufe der Zeit eine Aufkonzentrierung der Kalilauge auf etwa 40 % erfolgt. In gewissen Zeitabständen wird daher frische 10 %-ige Kalilauge in den Kathodenraum 14 eingespeist, während gleichzeitig aufkonzentrierte 40 %-ige Kalilauge ausgeschleust wird.

Die Alkalicyanidlösung, die zumindest ein Alkalisulfat oder ein Alkalimetaborat enthält, wird durch den Anodenraum 12 der Elektrolysezelle 10 geleitet und mit einer Stromdichte von 15 - 30 A/dm² aufoxidiert, wobei geringe Anteile an Alkalipersulfat bzw. Alkaliperborat aus den konzentrierten Lösungen ihrer Salze gebildet werden. Diese Verbindungen wirken in der Alkalicyanidlösung als Oxidationsmittel, die zum Ablösen von Edelmetallschichten, insbesondere von Gold-, Silber- und/oder Palladiumschichten oder von entsprechenden Legierungsschichten, von oberflächenbeschichtetem Material eingesetzt werden können. Bei höheren Stromdichten werden verstärkt Cyanidionen aufoxidiert.

Um den Cyanidgehalt der Alkalicyanidlösung aufrechtzuerhalten, wird in den Anodenkreislauf eine entsprechend konzentrierte Alkalicyanidlösung eingespeist, was in Fig. 1 beispielhaft anhand der Einspeisung einer 40 %-igen KCN-Lösung dargestellt ist.

Die Elektrolysezelle 10 ist mit einer Lösesäule oder Löseeinrichtung 22 verbunden, die das mit dem zurückzugewinnenden Edelmetall beschichtete Material enthält.

Die aufoxidierte Lösung aus dem Anodenraum 12 wird nun kontinuierlich über das sich in der Löseeinrichtung 22 befindenden Material geleitet, wobei das Alkalipersulfat bzw. das Alkaliperborat durch das elementare Edelmetall reduziert wird, das sich hierbei allmählich ablöst. Die Konzentration an Edelmetall, wie z.B. Gold, in der Lösung wächst hierbei von 0 auf ≥ 20 g/l an. Ein Teil der Lösung, die bei der Behandlung von Goldschichten beispielsweise K[Au(CN)₂], KCN und K₂SO₄ umfaßt, wird zur elektrolytischen Rückgewinnung des Edelmetalls aus dem Anodenkreislauf ausgeschleust.

Von der Löseeinrichtung 22 aus wird die mit Edelmetall beladene Alkalicyanidlösung wieder dem Anodenraum 12 der Elektrolysezelle 10 zur Aufoxidation zugeleitet. Das Ablösen der Edelmetalle und die erfindungemäße Aufoxidation der zum Ablösen verwendeten Edelmetalle erfolgt somit im wesentlichen im geschlossenen Kreislauf, so daß im Unterschied zum Stand der Technik mit einem minimalen Chemikalieneinsatz und Versorgungsaufwand gearbeitet werden kann.

Die erfindungsgemäße Aufoxidation der ein Alkalisulfat und/oder ein Alkalimetaborat umfassenden Alkalicyanidlösung zur Gewinnung des bei der Edelmetallablösung als Oxidationsmittel dienenden Alkalipersulfats bzw. Alkaliperborats wird nachstehend anhand von speziellen Ausführungsbeispielen noch näher erläutert.

Leitet man bei einer Anordnung gemäß Fig. 1 eine Lösung mit 60 g/l Kaliumcyanid und 25 g/l Natriumsulfat durch die Elektrolysezelle 10 und die Löseeinrichtung 22, die mit vernickeltem und vergoldetem Eisenschrott gefüllt ist, so überzieht sich die Goldoberfläche im Laufe der Zeit mit einer für das Auge nicht erkennbaren Passivschicht. Die Goldlösegeschwindigkeit geht infolge der Passivierung nach etwa 2 Stunden gegen Null, so daß die Lösereaktion zum Erliegen kommt. Dies ist auf die Bildung von Natriumgoldcyanid in der Lösung zurückzuführen, die bei Verwendung von Natriumsalzen erfolgt. Die Konzentration der Natriumsalze darf in der Lösung nicht mehr als etwa 15 g/l betragen. Die Stromausbeute, die auf der Bildung von einwertigen Goldionen berechnet wird, beträgt 5 %.

Leitet man hingegen 1 1 einer Lösung, die 23 g/l Kaliumcyanid und 9 g/l Natriumsulfat umfaßt, mit einer Durchf lußgeschwindigkeit von 1 l/min durch die Anordnung und führt die Elektrolyse bei einer Stromdichte von 30 A/dm² durch, so beträgt der Goldgehalt der Lösung nach 8 Stunden 20 g/l, wenn man den Cyanidgehalt der Lösung durch Zusatz von Kaliumcyanid aufrechterhält. Die Stromausbeute, berechnet auf der Bildung von einwertigem Gold, beträgt hierbei 18,5 %. Der Cyanidverbrauch, berechnet auf der Bildung von K[Au((CN)₂], entspricht der 6-fachen theoretischen Menge.

Verwendet man bei einer entsprechenden Anordnung eine Lösung mit einem Kaliumcyanidgehalt von 15 g/l und einem Kaliumsulfatgehalt von 10 g/l und führt bei gleichbleibender Strömungsgeschwindigkeit von 1 l/min die Elektrolyse bei einer Stromdichte von 15 A/dm² durch, so ist nach etwa 10 Stunden sämtliches Gold gelöst. Der pro Zeiteinheit erzielte Zuwachs an Gold in der Lösung ist hierbei unabhängig von der Schrottmenge. Die Goldkonzentration in der Lösung beträgt 27 g/l, während die Stromausbeute, berechnet auf einwertiges Gold, 25 % beträgt. Der Cyanidverbrauch, berechnet auf der Bildung von K[Au(CN)₂], beträgt das 5-fache des theoretisch berechneten Wertes. Es werden also große Anteile des gebildeten Kaliumpersulfats für die cyanidoxidation verbraucht.

Bei einem anderen Ausführungsbeispiel wird ein Liter einer Lösung mit 10 - 20 g/l Kaliumcyanid und 10 g/l Natriummetaborat mit einer Geschwindigkeit von 1 l/min durch die Anordnung gemäß Fig. 1 im Kreislauf geführt, wobei die Löseeinrichtung 22 mit Gold oberflächlich beschichteten Schrott enthält. Die Stromdichte bei der Elektrolyse beträgt 30 A/dm². Bei diesen Verfahrensparametern beträgt der Goldgehalt der Lösung nach 5 Stunden 25 g/l, während die Stromausbeute, berechnet auf einwertiges Gold, 23 % beträgt und der Cyanidverbrauch, berechnet auf einwertiges Gold, beträgt das 6-fache des theoretisch berechneten Wertes.

Erhöht man in dem vorliegenden Fall die Durchflußgeschwindigkeit von 1 l/min auf 3 l/min, so steigt die Stromausbeute, berechnet auf einwertiges Gold, auf 35 %, während der Cyanidverbrauch auf etwa das 4-fache des theoretisch berechneten Wertes sinkt.

Die in der Elektrolysezelle 10 anfallenden aufoxidierten Lösungen sind instabil, so daß sie nach erfolgter Elektrolyse unmittelbar der Lösesäule oder Löseeinrichtung 22 zugeführt werden müssen. Leitet man sie hingegen, so wie dies bei dem nachstehend noch beschriebenen Ausführungsbeispiel gemäß Fig. 2 der Fall ist, zur Volumenpufferung zunächst in einen Zwischenbehälter 24 und dann erst durch die Löseeinrichtung 22, so geht die Lösegeschwindigkeit des Goldes gegen Null. Der Anteil der Peroxoverbindungen wird beim Transport in den Zwischenbehälter 24 zur Aufoxidation des Cyanids verbraucht, so daß in der Löseeinrichtung 22 keine Oxidation der Edelmetalle mehr erfolgen kann.

Im Unterschied hierzu sind cyanidische Lösungen, die Nitroaromaten als Oxidationsmittel enthalten, stabil, so daß sie bei 20 °C über einen längeren Zeitraum ohne Zersetzung gelagert werden können. Bei Verwendung von Nitroaromaten kann die Alkalicyanidlösung daher, im Unterschied zu der in Fig. 1 dargestellten Ausführungsvariante, über einen als Volumenpuffer dienenden Zwischenbehälter 24 geleitet werden, der bei der in Fig. 2 dargestellten beispielhaften Anordnung zwischen der Elektrolysezelle 10 und der Löseeinrichtung 22 angeordnet ist.

Auch bei dieser, eine Alkalicyanidlösung mit zumindest einen Nitroaromaten betreffende Ausführungsvariante wird die Lösung wiederum mit einer Strömungsgeschwindigkeit zwischen 1 und 3 l/min durch die Löseeinrichtung 22 und den Anodenraum 12 der Elektrolysezelle 10 gepumpt, in der bei Stromdichten zwischen 5 und 10 A/dm² die Aufoxidation der Lösung erfolgt. Insbesondere werden hierbei die sich beim Lösen des Edelmetalls bildende Nitrosoverbindungen wieder zu der als Oxidationsmittel dienende Nitroverbindungen aufoxidiert. Diese Aufoxidation ist die Grundlage für einen wirtschaftlichen Einsatz von cyanidhaltigen Lösungen, die Nitroaromaten als Oxidationsmittel enthalten und zum Ablösen von Edelmetallschichten von oberflächenbeschichteten Teilen eingesetzt werden.

Auch bei diesem Ausführungsbeispiel ist der Kathodenraum 14 der Elektrolysezelle 10 wiederum mit einer 10 %-iger Kalilauge gefüllt, die im Laufe der Zeit durch die Überführung von Kaliumionen aufoxidiert wird. In regelmäßigen Abständen wird daher aus dem Kathodenraum 14 aufkonzentrierte Kalilauge ausgeschleust, während gleichzeitig verdünnte 10 %-ige Kalilauge zugesetzt wird.

Bei dem vorliegenden Ausführungsbeispiel wird die metallhaltige Alkalicyanidlösung, die außer Edelmetallen, wie z.B. Gold üblicherweise auch Verunreinigungen an Kupfer und Nickel enthält, in einer der Löseeinrichtung nachgeschalteten zweiten Elektrolysezelle 26 bei einer Stromdichte zwischen 5 und 20 A/dm² elektrolytisch aufgearbeitet, um die Edelmetalle und/oder Verunreinigungen in einer für die Weiterverarbeitung geeigneten Form zurückzugewinnen.

Die Alkalicyanidlösung wird hierbei nach dem Durchströmen der Löseeinrichtung 22 mit etwa 3 l/min kontinuierlich durch den Kathodenraum 28 der zweiten Elektrolysezelle 26 geleitet bevor sie, wie bereits beschrieben wurde, in der ersten Elektrolysezelle 10 aufoxidiert und in der Löseeinrichtung 22 anschließend erneut zum Lösen von Gold verwendet wird. Durch diese Betriebsweise in geschlossenem Kreislauf kommt man bei dem erfindungsgemäßen Verfahren im Unterschied zum Stand der Technik mit einem Minimum an Chemikalien und einem minimalen Entsorgungsaufwand aus.

Der Anodenraum 30 der zweiten Elektrolysezelle 26 ist hierbei mit einer 10 %-igen Kalilauge gefüllt, deren Konzentration durch den Zusatz an 40 %-iger konzentrierter Kalilauge aufrechterhalten wird, wofür man zur Optimierung des Verfahrens beispielsweise die aus dem Kathodenraum 14 der Elektrolysezelle 10 ausgeschleuste Kalilauge verwenden kann.

Als Kathode 34 wird ein Stab oder ein schmales Blech aus Titan verwendet, während die Anode 36 aus einem rostfreien Stahlblech besteht.

Der Anodenraum 30 und der Kathodenraum 28 der Elektrolysezelle 36 sind durch eine mit Gold beschichtete Kationenaustauschermembran 32 voneinander getrennt.

Bei den angegebenen Bedingungen wird beispielsweise das in der Alkalicyanidlösung enthaltene Gold mit einer Reinheit von bis zu 99 % pulverförmig im Kathodenraum abgeschieden. Bedingt durch die Metallabscheidung steigt die Cyanidkonzentration während der Elektrolyse an.

Die Abscheidung von Verunreinigungen läßt sich durch Veränderung der Stromdichte und der Cyanidkonzentration beeinflussen.

Bei einer Lösung mit 6,45 g/l Au; 7,49 g/l Cu; 0,834 g/l Ni und 11,1 g/l KCn, bei der der Gehalt an Verunreingungen 50,7 % Cu und 5,65 % Ni beträgt, bewirkt eine Verdopplung der Stromdichte beispielsweise eine Vervierfachung der Cu-Verunreinigungen im Gold und eine Verdopplung der Ni-Verunreinigungen bei gleichzeitiger Verringerung der Stromausbeute. Die exakten Meßergebnisse sind in der folgenden Tabelle 1 zusammengestellt.

**Tabelle 1:**

| Variation der Stromdichte | | | |
|---|---|---|---|
| Stromdichte | Verunreinigungen im Au | | Stromausbeute |
| A/dm² | Cu [%] | Ni [%] | [%] |
| 8,5 | 6,6 | 1,1 | 60 |
| 10,1 | 16,7 | 0,9 | 50 |
| 16,6 | 27,0 | 2,2 | 40 |

Eine Erhöhung des Cyandigehaltes hingegen führt zu einer starken Abnahme an Verunreinigungen im Gold bei gleichzeitiger Verringerung der Stromausbeute. Beispielhafte Ergebnisse sind in der folgenden Tabelle 2 für eine Stromdichte von 8,3 A/dm² angegeben, wobei die Zusammensetzung der Lösung der oben angegebenen Zusammensetzung entspricht.

**Tabelle 2:**

| Variation des Cyanidgehaltes | | | |
|---|---|---|---|
| KCN | Verunreinigungen im Au | | Stromausbeute |
| [g/l] | Cu [%] | Ni [%] | [%] |
| 15 | 4,2 | 0,4 | 50 |
| 20 | 2,9 | 0,3 | 40 |
| 25 | 0,8 | 0,2 | 10 |

Die erfindungsgemäße Regeneration von Nitroaromaten durch Aufoxidation in einer Elektrolysezelle wird nachstehend noch anhand von einigen speziellen Ausführungebeispielen näher erläutert:

Leitet man beispielsweise bei der Anordnung gemäß Fig. 2 eine Lösung mit einem Gehalt von 20 g/l Kaliumcyanid und 10 g/l nitrobenzolsulfonsaures Natriumsalz mit einer Strömungsgeschwindigkeit von 1 l/min durch die Elektrolysezelle 10 und die Löseeinrichtung 22, die 4 kg vernickelten, verzinnten und vergoldeten Kupferschrott enthält, so ist bei einer Stromdichte von 10 A/dm² das Gold nach 30 min gelöst. Der Kupferschrott kann dann aus der Löseeinrichtung 22 entnommen und eine neue Charge bearbeitet werden. Der pH-Wert wird hierbei so eingestellt, daß er größer oder etwa gleich 11,0 ist, um ein Ausfallen von Zinnoxihydroxid zu verhindern.

In einem weiteren Versuch werden 20 Chargen an vernickeltem, verzinntem und vergoldetem Kupferschrott ä 4 kg mit 8 1 einer Lösung behandelt, die 10 - 20 g/l Kaliumcyanid und 8 - 10 g/l Natriumsalz der Nitrobenzolsulfonsäure enthält. Die Durchflußgeschwindigkeit durch die Elektrolysezelle und die Löseeinheit beträgt 1 l/min. Die Elektrolyse erfolgt mit eienr Stromdichte von 10 A/dm².

Wie in der folgenden Tabelle 3 zu erkennen ist, steigt die Goldkonzentration im Verlauf der Elektrolyse von 0 auf 30 g/l an, wobei der Anteil des einwertigen Goldes von 73 % auf 50 % absinkt. Neben der Oxidation des Goldes zum einwertigen Goldcyanokomplex [Au(CN)₂]⁻ erfolgt also auch die Oxidation zum dreiwertigen Goldcyanokomplex [Au(CN)₄]⁻.

**Tabelle 3:**

| Verlauf der Goldkonzentration in der Lösung und Veränderung der Oxidationsstufen des gelösten Goldes | | | |
|---|---|---|---|
| Charge | Au⁺ / Au_{ges} [g/l] | [Au⁺] [%] | Au⁺ / Au_{ges} [g] |
| 1 - 4 | 6,4 / 8,8 | 73 | 51,2/ 70,4 |
| 5 - 8 | 7,8 / 12,1 | 64 | 62,4/ 96,8 |
| 9 - 12 | 9,6 / 15,3 | 63 | 76,8/ 122,4 |
| 13 - 16 | 13,1 / 22,5 | 58 | 104,8/ 180,0 |
| 17 - 20 | 15,0 / 30,0 | 50 | 120,0/ 240,0 |

Es werden 56 g Nitroaromat eingesetzt. Bei der kontinuierlichen Aufoxidation der Lösung werden ingesamt 240 g Gold gelöst. Der Cyanidverbrauch berechnet auf [Au(CN)₂]⁻, [Au(CN)₄]⁻ und die in der Lösung enthaltenden Verbindungen beträgt hierbei das 13-fache der theoretisch berechneten Menge.

Das zur Rückgewinnung eingesetzte Material ist nur teilweise mit Gold beschichtet. In der alkalischen Lösung gehen auch Anteile von Zinn in Lösung, die durch Absenkung des pH-Wertes auf weniger als etwa 11, in Form von Zinnoxihydroxid abgetrennt werden können.

Bedingt durch die mechanische Zerkleinerung des Materials wird außer Gold und Zinn auch Kupfer und Nickel von den offenliegenden Schnittkanten gelöst. Wie in den folgenden beiden Tabellen 4 und 5 zu erkennen ist, steigt der Anteil an Kupfer und Nickel hierbei bis zu einer bestimmten Grenzkonzentration an, bevor die Löslichkeit des Kupfers und Nickels gegen Null geht.

**Tabelle 4:**

| Anstieg des Kupfergehaltes in Abhängigkeit vom Goldgehalt in der Lösung | | | |
|---|---|---|---|
| Chargen Nr. | Cu-Gehalt | Au-Gehalt | Anstieg des Cu-Gehaltes im Verhältnis zum gelösten Gold |
| | [g/l] | [g/l] | |
| | 2,3 | 6,6 | 0,35 g Cu/ 1 g Au |
| 1 - 5 | 2,3 - 3,8 | 6,6 - 12,4 | 0,26 g Cu/ 1 g Au |
| 6 - 15 | 3,8 - 6,3 | 12,4 - 22,5 | 0,24 g Cu/ 1 g Au |
| 16 - 19 | 6,3 - 6,9 | 25,4 - 29,4 | 0,15 g Cu/ 1 g Au |
| 20 - 21 | 6,9 - 7,0 | 29,4 - 32,0 | 0,04 g Cu/ 1 g Au |

**Tabelle 5:**

| Anstieg des Nickelgehaltes in Abhängigkeit vom Goldgehalt in der Lösung | | | |
|---|---|---|---|
| Chargen Nr. | Ni-Gehalt | Au-Gehalt | Anstieg des Nickels-Gehaltes im Verhältnis zum gelösten Gold |
| | [g/l] | [g/l] | |
| | 0,68 | 6,6 | 0,1 g Ni/ 1 g Au |
| 1 - 5 | 0,68 - 0,73 | 6,6 - 12,4 | 8x10⁻³g Ni/ 1 g Au |
| 6 - 15 | 0,73 - 0,76 | 12,4 - 22,5 | 3x10⁻³g Ni/ 1 g Au |
| 16 - 19 | 0,76 - 0,77 | 25,9 - 29,4 | 3x10⁻³g Ni/ 1 g Au |
| 20 - 21 | 0,77 - 0,78 | 29,4 - 32,0 | 3x10⁻³g Ni/ 1 g Au |

Die Ablösegeschwindigkeit einer Goldschicht wird durch den Gehalt an Verunreinigungen in der verwendeten Alkalicyanidlösung stark beeinflußt. Behandelt man beispielsweise eine Kupferprobe, die eine Nickelschicht mit einer Dicke von 1 µm und eine Goldschicht mit einer Dicke von 5 µm aufweist, mit einer frisch angesetzten Lösung, die 10 g/l Kaliumcyanid und 10 g/l nitrobenzoesaures Natriumsalz enthält, so ist die Goldschicht nach 10 min abgelöst. Behandelt man eine entsprechende Kupferprobe hingegen mit einer frisch aufoxidierten Lösung, die 10 g/l KCN; 10 g/l Nitroaromat; 7,0 g/l Kupfer; 0,78 g/l Nickel und 32 g/l Gold in Form des Cyanidkomplexes enthält, so ist die Goldschicht bereits nach 3 min abgelöst. Mit frisch aufoxidierten verunreinigten Alkalicyanidlösungen läßt sich somit im Vergleich zu frisch angesetzten Lösungen ohne metallische Verunreinigungen eine erhebliche Steigerung der Lösegeschwindigkeit erzielen.

Die Stabilität von Lösungen, die Nitroaromaten enthalten, gestattet es, daß der Löseprozeß in der Löseeinrichtung 22 und der Oxidationsprozeß in der Elektrolysezelle 10 zur Regeneration des verbrauchten Oxidationsmittels auch unabhängig voneinander ablaufen können, so daß ein geschlossener Kreislauf der in Fig. 2 dargestellten Art nicht unbedingt erforderlich ist. In diesem Fall wird die verbrauchte Alkalicyanidlösung nach ein- oder mehrmaligem Durchlaufen der Löseeinrichtung abgetrennt und an einen anderen Ort in einer Elektrolysezelle der oben beschriebenen Art elektrolysiert und damit für einen späteren Gebrauch als Ablösemittel für Edelmetallschichten regeneriert. Die Aufoxidation der Lösung kann hierbei durch den Verlauf der Cyanidkonzentration bei der Elektrolyse verfolgt werden.

Bei der elektrolytischen Aufoxidation einer Lösung, die zum Ablösen von Gold nicht mehr geeignet ist, ergibt sich beispielweise der in der folgenden Tabelle dargestellte zeitliche Verlauf der Cyanidkonzentration. 100 1 der Lösung werden hierbei mit einer Geschwindigkeit von 3 l/min durch die Elektrolysezelle und den Vorratsbehälter geführt. Die Stromdichte bei der Elektrolyse beträgt 15 A/dm².

**Tabelle 6:**

| Zeitlicher Verlauf der Cyanidkonzentration bei der Aufoxidation | |
|---|---|
| KCN [g/l] | Zeit [h] |
| 14,0 | 2 |
| 13,8 | 4 |
| 13,4 | 6 |
| 13,6 | 8 |
| 13,6 | 10 |
| 12,3 | 11 |
| 10,0 | 12 |

In der Lösung werden die Nitrosoverbindungen und die Cyanokomplexe des Goldes, Nickels und Kupfers aufoxidiert, was sich an dem zunächst geringen Abfall der Cyanidkonzentration bemerkbar macht. Die Oxidation des Cyanids zum Cyanat macht sich durch einen starken Abfall der Cyanidkonzentration bemerkbar. Die Kenntnis dieser Reaktion ermöglicht die Automatisierung des Prozesses.

Alkalicyanidlösungen mit zumindest einem Nitroaromaten können auch zum gleichzeitigen Ablösen von Gold- und Silberschichten von entsprechend beschichtetem Material verwendet werden. Da Gold in cyanidischer Lösung unedler als das Silber wird, lösen sich beide Edelmetalle gemeinsam auf.

Behandelt man beispielsweise mit Gold beschichtete Silberteile mit einer Lösung, die 10 g/l Kaliumcyanid und 10 g/l Nitrobenzolsulfonsäure in Form des Natriumsalzes enthält, so lösen sich die Teile vollkommen auf. Es entsteht eine Lösung mit einem Gehalt von 57 g/l Silber und 15,4 g/l Gold.

Da die Trennung von Gold und Silber bei der anschließenden Raffination jedoch Schwierigkeiten bereitet, sollte es das Ziel sein, möglichst wenig Silber gemeinsam mit dem Gold zu lösen, um den Raffinationsaufwand so gering wie möglich zu halten.

Dies läßt sich durch Verwendung einer Lösung erreichen, die Gold, Kupfer und Nickel als Cyanokomplex enthält. Behandelt man die mit Gold beschichteten Silberteile nämlich mit einer Lösung, die 13 g/l Kaliumcyanid; 10 g/l nitrobenzolsulfonsaures Natrium; 7,06 g/l Gold; 7,47 g/l Kupfer und 1,01 g/l Nickel enthält, so löst sich im wesentlichen das Gold mit nur geringen Anteilen an Silber. Man erhält eine Lösung mit 14,6 g/l Gold; 7,5 g/l Kupfer; 1,1 g/l Nickel und 0,27 g/l Silber. In diesem Fall lösen sich somit 7,5 g Gold und lediglich 0,27 g Silber.

Durch geeignete Zusammensetzung der Alkalicyanidlösung kann man das erfindungsgemäße Ablöseverfahren somit auch zum selektiven Ablösen von Edelmetallschichten, insbesondere zum selektiven Ablösen von Gold- und Silberschichten verwenden.

Obgleich sich die angeführten speziellen Ausführungsbeispiele lediglich auf die Ablösung von Gold- und/oder Silberschichten von entsprechend beschichtetem Material und auf die Abscheidung dieser Edelmetalle aus den zur Ablösung verwendeten Alkalicyanidlösungen beziehen, sei darauf hingewiesen, daß die erfindungsgemäßen Verfahren entsprechend auch auf die Rückgewinnung von Palladium und/oder anderen Edelmetallen anwendbar sind.

Wirtschaftlich interessant ist eine solcher Rückgewinnung beispielsweise bei Kontakten, die in letzter Zeit verstärkt zunächst mit einer 2 - 3 µm dicken Schicht aus Palladium und anschließend mit einer 2 µm dicken Schicht aus Gold galvanisch beschichtet werden. Behandelt man solche Kontakte mit einer Lösung, die 10 g/l KCN und 10 g/l eines Nitroaromaten enthält, so wird bei Raumtemperatur bevorzugt das Gold abgelöst. Auf der Palladiumschicht bildet sich eine dünne Pd(CN)₂-Schicht. Erwärmt man die Lösung auf 50 - 60 °C und verlängert die Behandlungszeit auf 15 - 20 min, geht neben dem Gold auch das Palladium in Lösung. Durch entsprechende Wahl der Verfahrensparamete, wie Behandlungstemperatur, Behandlungsdauer und Zusammensetzung der Lösung, ermöglicht das erf indungsgemäße Verfahren somit auch eine stufenweise oder selektive Ablösung von Gold- und Palladiumschichten, was mit einer entsprechenden Verringerung des Regenerationsaufwandes verbunden ist.

Eine Verringerung der Lösezeit läßt sich durch Verwendung einer Lösung erreichen, die 10 g/l K₂SO₄, 10 g/l eines Nitroaromaten und 10 g/l KCN enthält. Setzt man eine entsprechene Lösung nach der Aufoxidation in der Elektrolysezelle 10 zum Lösen ein, so beträgt die Lösezeit für die Palladiumschicht bei 40 °C nur noch 10 min. Das in der Lösung enthaltene Gold und Palladium wird nach der Überführung in die feste Form, die beispielsweise wiederum elektrolytisch erfolgen kann, mittels bekannter Verfahren abgetrennt.

## Patentansprüche

1. Verfahren zum Ablösen von Edelmetallschichten von entsprechend beschichtetem Material durch Lösen der Edelmetalle in einer ein Oxidationsmittel umfassenden salzhaltigen Alkalicyanidlösung,
**dadurch gekennzeichnet,**
**daß** die Alkalicyanidlösung zur Gewinnung und/oder Regeneration des Oxidationsmittels elektrolytisch aufoxidiert wird.

2. Verfahren nach Anspruch 1,
**dadurch gekennzeichnet,**
**daß** die Alkalicyanidlösung zumindest ein Alkalisulfat, ein Alkalimetaborat und/oder einen Nitroaromaten umfaßt.

3. Verfahren nach Anspruch 2,
**dadurch gekennzeichnet,**
**daß** die Alkalicyanidlösung 10 - 60 g/l Alkalicyanid und 8 - 25 g/l des zumindest einen Alkalisulfats, Alkalimetaborats und/oder Nitroaromaten umfaßt.

4. Verfahren nach Anspruch 3,
**dadurch gekennzeichnet,**
**daß** die Alkalicyanidlösung 10 - 20 g/l Alkalicyanid umfaßt.

5. Verfahren nach einem der Ansprüche 2 bis 4,
**dadurch gekennzeichnet,**
**daß** der zumindest eine Nitroaromat Nitrobenzoesäure, Nitrobenzolsulfonsäure, Nitrochlorbenzol, Nitroanilin, Nitrophenol, Nitrophthalsäure oder Nitrotoluolsulfonsäure umfaßt.

6. Verfahren nach einem der vorhergehenden Ansprüchen,
**dadurch gekennzeichnet,**
**daß** die Alkaliverbindungen Verbindungen des Natriums oder des Kaliums umfassen.

7. Verfahren nach einem der vorhergehenden Ansprüche,
**dadurch gekennzeichnet,**
**daß** die Edelmetallschichten Gold, Silber und/oder Palladium oder entsprechende Legierungen umfassen.

8. Verfahren nach einem der vorhergehenden Ansprüche,
**gekennzeichnet durch**
das selektive Ablösen von Edelmetallschichten.

9. Verfahren nach Anspruch 8,
**dadurch gekennzeichnet,**
**daß** Gold- und Palladiumschichten selektiv abgelöst werden, wobei das Ablösen über die Behandlungsdauer, die Behandlungstemperatur und die Zusammensetzung der Alkalicyanidlösung gesteuert wird.

10. Verfahren nach Anspruch 9,
**dadurch gekennzeichnet,**
**daß** Gold in einer Lösung mit 10 g/l KCN und 10 g/l eines Nitroaromaten selektiv von Palladium abgelöst wird.

11. Verfahren nach Anspruch 8,
**dadurch gekennzeichnet,**
**daß** Gold in einer Alkalicyanidlösung mit Gold, Kupfer und/oder Nickel als Cyanokomplex selektiv von Silber abgelöst wird.

12. Verfahren nach einem der vorhergehenden Ansprüche,
**dadurch gekennzeichnet,**
**daß** die Temperatur der Alkalicyanidlösung 20 - 30° C beträgt.

13. Verfahren nach einem der vorhergehenden Ansprüche,
**dadurch gekennzeichnet,**
**daß** der pH-Wert der Alkalicyanidlösung ≥ 11 beträgt.

14. Verfahren nach einem der vorhergehenden Ansprüche,
**dadurch gekennzeichnet,**
**daß** der Cyanidgehalt der Alkalicyanidlösung durch Zusatz von Alkalycyanid aufrechterhalten wird.

15. Verfahren nach einem der vorhergehenden Ansprüche,
**dadurch gekennzeichnet,**
**daß** die Aufoxidation im Anodenraum (12) zumindest einer Elektrolysezelle (10) erfolgt, der von dem mit einem starken Elektrolyten gefüllten zugehörigen Kathodenraum (14) durch eine Kationenaustauschermembran (16) getrennt ist.

16. Verfahren nach Anspruch 15,
**dadurch gekennzeichnet,**
**daß** als starker Elektrolyt eine 10%-ige Kalilauge oder Natronlauge verwendet wird.

17. Verfahren nach Anspruch 15 oder 16,
**dadurch gekennzeichnet,**
**daß** eine Anode (18) aus Platin und/oder eine Kathode (20) aus nichtrostendem Stahl verwendet wird.

18. Verfahren nach einem der Ansprüche 15 bis 17,
**dadurch gekennzeichnet,**
**daß** die Stromdichte 5 - 50 A/dm² beträgt.

19. Verfahren nach Anspruch 18,
**dadurch gekennzeichnet,**
**daß** die Stromdichte 15 - 30 A/dm² beträgt.

20. Verfahren nach einem der Ansprüche 15 bis 19,
**dadurch gekennzeichnet,**
**daß** die Alkalicyanidlösung mit einer Strömungsgeschwindigkeit von 1 - 3 l/min durch den Anodenraum (12) der Elektrolysezelle (10) geleitet wird.

21. Verfahren nach einem der vorhergehenden Ansprüche,
**dadurch gekennzeichnet,**
**daß** die in der Alkalicyanidlösung gelösten Edelmetalle oder Edelmetalle und metallischen Verunreinigungen durch ein elektrolytisches Verfahren abgeschieden werden, bei dem die Alcalicyanidlösung durch den Kathodenraum (28) einer Elektrolysezelle (26) geleitet wird, der von dem mit einem starken Elektrolyten gefüllten zugehörigen Anodenraum (30) durch eine Kationenaustauschermembran (32) getrennt ist.

22. Verfahren nach Anspruch 21,
**dadurch gekennzeichnet,**
**daß** eine mit Edelmetall beschichtete Kationenaustauschermembran (32) verwendet wird.

23. Verfahren nach Anspruch 22,
**dadurch gekennzeichnet,**
**daß** das Edelmetall Gold umfaßt.

24. Verfahren nach einem der Ansprüche 21 bis 23,
**dadurch gekennzeichnet,**
**dass** Gold, Silber und/oder Palladium abgeschieden wird.

25. Verfahren nach einem der Ansprüche 21 bis 24,
**dadurch gekennzeichnet,**
**daß** als starker Elektrolyt eine 10 %-ige Kalilauge oder Natronlauge verwendet wird.

26. Verfahren nach einem der Ansprüche 21 bis 25,
**dadurch gekennzeichnet,**
**daß** die Konzentration des starken Elektrolyten durch Zusatz einer entsprechend konzentrierten Lösung gleicher Art aufrechterhalten wird.

27. Verfahren nach einem der Ansprüche 21 bis 26,
**dadurch gekennzeichnet,**
**daß** eine Kathode (34) aus Titan und/oder eine Anode (36) aus rostfreiem Stahl verwendet wird.

28. Verfahren nach einem der Ansprüche 21 bis 27,
**dadurch gekennzeichnet,**
**daß** ein Stab oder ein schmales Blech als Kathode (34) und/oder ein Blech als Anode (36) verwendet wird.

29. Verfahren nach einem der Ansprüche 21 bis 28,
**dadurch gekennzeichnet,**
**daß** die Stromdichte 5 - 20 A/dm² beträgt.

30. Verfahren nach einem der Ansprüche 21 bis 29,
**dadurch gekennzeichnet,**
**daß** die Edelmetalle in Pulverform abgeschieden werden.

31. Verfahren nach einem der Ansprüche 21 bis 30,
**dadurch gekennzeichnet,**
**daß** die Abscheidung kontinuierlich erfolgt.

32. Verfahren nach einem der Ansprüche 21 bis 31,
**dadurch gekennzeichnet,**
**daß** die Aufoxidation der Alkalicyanidlösung, das Ablösen der Edelmetalle und das Abscheiden in geschlossenem Kreislauf erfolgt.

33. Verfahren nach einem der Ansprüche 21 bis 32,
**dadurch gekennzeichnet,**
**daß** das Verfahren kontinuierlich betrieben wird.

34. Verfahren zur elektrolytischen Abscheidung von Edelmetallen oder Edelmetallen und metallischen Verunreinigungen aus einer Alkalicyanidlösung, bei dem die Alkalicyanidlösung durch den Kathodenraum (28) einer Elektrolysezelle (26) geleitet wird, der von dem mit einem starken Elektrolyten gefüllten zugehörigen Anodenraum (30) durch eine Kationenaustauschermembran (32) getrennt ist,
**dadurch gekennzeichnet,**
**daß** eine mit Edelmetall beschichtete Kationenaustauschermembran (32) verwendet wird.

35. Verfahren nach Anspruch 34,
**dadurch gekennzeichnet,**
**daß** eine mit Gold beschichtete Kationenaustauschermembran (32) verwendet wird.

36. Verfahren nach Anspruch 34 oder 35,
**dadurch gekennzeichnet,**
**dass** Gold, Silber und/oder Palladium abgeschieden wird.

37. Verfahren nach einem der Ansprüche 34 bis 36,
**dadurch gekennzeichnet,**
**daß** als starker Elektrolyt eine 10 %-ige Kalilauge oder Natronlauge verwendet wird.

38. Verfahren nach einem der Ansprüche 34 bis 37,
**dadurch gekennzeichnet,**
**daß** die Konzentration des starken Elektrolyten durch Zusatz einer entsprechend konzentrierten Lösung gleicher Art aufrechterhalten wird.

39. Verfahren nach einem der Ansprüche 34 bis 38,
**dadurch gekennzeichnet,**
**daß** eine Kathode (34) aus Titan und/oder eine Anode (36) aus rostfreiem Stahl verwendet wird.

40. Verfahren nach einem der Ansprüche 34 bis 39,
**dadurch gekennzeichnet,**
**daß** ein Stab oder ein schmales Blech als Kathode (34) und/oder ein Blech als Anode (36) verwendet wird.

41. Verfahren nach einem der Ansprüche 34 bis 40,
**dadurch gekennzeichnet,**
**daß** die Stromdichte 5 - 20 A/dm² beträgt.

42. Verfahren nach einem der Ansprüche 34 bis 41,
**dadurch gekennzeichnet,**
**daß** die Edelmetalle in Pulverform abgeschieden werden.

43. Verfahren nach einem der Ansprüche 34 bis 42,
**dadurch gekennzeichnet,**
**daß** die Abscheidung kontinuierlich erfolgt.

44. Verfahren zur Regeneration einer zumindest einen Nitroaromaten umfassenden salzhaltigen Alkalicyanidlösung zum Ablösen von Edelmetallen von oberflächenbeschichtetem Material,
**dadurch gekennzeichnet,**
**daß** die Alkalicyanidlösung im Anodenraum (12) zumindest einer Elektrolysezelle (10) elektrolytisch aufoxidiert wird, der von dem mit einem starken Elektrolyten gefüllten zugehörigen Kathodenraum (14) durch eine Kationenaustauschermembran (16) getrennt ist.

45. Verfahren nach Anspruch 44,
**dadurch gekennzeichnet,**
**daß** als starker Elektrolyt eine 10 %-ige Kalilauge oder Natronlauge verwendet wird.

46. Verfahren nach Anspruch 44 oder 45,
**dadurch gekennzeichnet,**
**daß** eine Anode (18) aus Platin und/oder eine Kathode (20) aus nichtrostendem Stahl verwendet wird.

47. Verfahren nach einem der Ansprüche 44 bis 46,
**dadurch gekennzeichnet,**
**daß** die Stromdichte 5 - 50 A/dm² beträgt.

48. Verfahren nach Anspruch 47,
**dadurch gekennzeichnet,**
**daß** die Stromdichte 15 - 30 A/dm² beträgt.

49. Verfahren nach einem der Ansprüche 44 bis 48,
**dadurch gekennzeichnet,**
**daß** die Alkalicyanidlösung mit einer Strömungsgeschwindigkeit von 1 - 3 l/min durch den Anodenraum (12) der Elektrolysezelle (10) geleitet wird.

50. Verfahren nach Anspruch 44,
**dadurch gekennzeichnet,**
**daß** die in der Alkalicyanidlösung gelösten Edelmetalle oder die Edelmetalle und Verunreinigungen durch ein Verfahren elektrolytisch abgeschieden werden, bei dem die Alkalicyanidlösung durch den Kathodenraum (28) einer Elektrolysezelle (26) geleitet wird, der von dem mit einem starken Elektrolyten gefüllten zugehörigen Anodenraum (30) durch eine Kationenaustauschermembran (32) getrennt ist.

51. Verfahren nach Anspruch 50,
**dadurch gekennzeichnet,**
**daß** eine mit Edelmetall beschichtete Kationenaustauschermembran (32) verwendet wird.

52. Verfahren nach Anspruch 51,
**dadurch gekennzeichnet,**
**daß** das Edelmetall Gold umfaßt.

53. Verfahren nach Anspruch 51 oder 52,
**dadurch gekennzeichnet,**
**dass** Gold, Silber und/oder Palladium abgeschieden wird.

54. Verfahren nach einem der Ansprüche 50 bis 53,
**dadurch gekennzeichnet,**
**daß** als starker Elektrolyt eine 10 %-ige Kalilauge oder Natronlauge verwendet wird.

55. Verfahren nach einem der Ansprüche 50 bis 54,
**dadurch gekennzeichnet,**
**daß** die Konzentration des starken Elektrolyten durch Zusatz einerentsprechend konzentrierten Lösung gleicher Art aufrechterhalten wird.

56. Verfahren nach einem der Ansprüche 50 bis 55,
**dadurch gekennzeichnet,**
**daß** eine Kathode (34) aus Titan und/oder eine Anode (36) aus rostfreiem Stahl verwendet wird.

57. Verfahren nach einem der Ansprüche 50 bis 56,
**dadurch gekennzeichnet,**
**daß** ein Stab oder ein schmales Blech als Kathode (34) und/oder ein Blech als Anode (36) verwendet wird.

58. Verfahren nach einem der Ansprüche 50 bis 57,
**dadurch gekennzeichnet,**
**daß** die Stromdichte 5 - 20 A/dm² beträgt.

59. Verfahren nach einem der Ansprüche 50 bis 58,
**dadurch gekennzeichnet,**
**daß** die Edelmetalle in Pulverform abgeschieden werden.

60. Verfahren nach einem der Ansprüche 50 bis 59,
**dadurch gekennzeichnet,**
**daß** die Abscheidung kontinuierlich erfolgt.

## Claims

1. Method for removing precious metal layers from correspondingly coated material by dissolving the precious metals in a salt-containing alkali metal cyanide solution which includes an oxidizing agent, **characterized in that** the alkali metal cyanide solution is electrolytically oxidized in order to obtain and/or regenerate the oxidizing agent.

2. Method according to Claim 1, **characterized in that** the alkali metal cyanide solution comprises at least one alkali metal sulphate, at least one alkali metal metaborate and/or at least one nitroaromatic compound.

3. Method according to Claim 2, the alkali metal cyanide solution comprises 10-60 g/l of alkali metal cyanide and 8-25 g/l of the at least one alkali metal sulphate, alkali metal metaborate and/or nitroaromatic compound.

4. Method according to Claim 3, **characterized in that** the alkali metal cyanide solution comprises 10-20 g/l of alkali metal cyanide.

5. Method according to one of Claims 2 to 4, **characterized in that** the at least one nitroaromatic compound comprises nitrobenzoic acid, nitrobenzenesuphonic acid, nitrochlorobenzene, nitroaniline, nitrophenol, nitrophthalic acid or nitrotoluenesulphonic acid.

6. Method according to one of the preceding claims, **characterized in that** the alkali metal compounds comprise compounds of sodium or of potassium.

7. Method according to one of the preceding claims, **characterized in that** the precious metal layers comprise gold, silver and/or palladium or corresponding alloys.

8. Method according to one of the preceding claims, **characterized by** the selective removal of precious metal layers.

9. Method according to Claim 8, **characterized in that** gold and palladium layers are removed selectively, the removal being controlled by means of the treatment time, the treatment temperature and the composition of the alkali metal cyanide solution.

10. Method according to Claim 9, **characterized in that** gold is selectively removed from palladium in a solution comprising 10 g/l of KCN and 10 g/l of a nitroaromatic compound.

11. Method according to Claim 8, **characterized in that** gold is selectively removed from silver in an alkali metal cyanide solution comprising gold, copper and/or nickel as cyano complex.

12. Method according to one of the preceding claims, **characterized in that** the temperature of the alkali metal cyanide solution is 20-30°C.

13. Method according to one of the preceding claims, **characterized in that** the pH of the alkali metal cyanide solution is ≥ 11.

14. Method according to one of the preceding claims, **characterized in that** the cyanide content of the alkali metal cyanide solution is maintained by adding alkali metal cyanide.

15. Method according to one of the preceding claims, **characterized in that** the oxidation takes place in the anode space (12) of at least one electrolysis cell (10), which is separated from the associated cathode space (14), which is filled with a strong electrolyte, by a cation exchange membrane (16).

16. Method according to Claim 15, **characterized in that** the strong electrolyte used is a 10% strength potassium hydroxide solution or sodium hydroxide solution.

17. Method according to Claim 15 or 16, **characterized in that** an anode (18) made from platinum and/or a cathode (20) made from stainless steel is used.

18. Method according to one of Claims 15 to 17, **characterized in that** the current density is 5-50 A/dm².

19. Method according to Claim 18, **characterized in that** the current density is 15-30 A/dm².

20. Method according to one of Claims 15 to 19, **characterized in that** the alkali metal cyanide solution is passed through the anode space (12) of the electrolysis cell (10) at a flow rate of 1-3 l/min.

21. Method according to one of the preceding claims, **characterized in that** the precious metals or precious metals and metallic impurities which are dissolved in the alkali metal cyanide solution are precipitated by means of an electrolytic method in which the alkali metal cyanide solution is passed through the cathode space (28) of an electrolysis cell (26), which is separated from the associated anode space (30), which is filled with a strong electrolyte, by a cation exchange membrane (32).

22. Method according to Claim 21, **characterized in that** a cation exchange membrane (32) coated with precious metal is used.

23. Method according to Claim 22, **characterized in that** the precious metal comprises gold.

24. Method according to one of Claims 21 to 23, **characterized in that** gold, silver and/or palladium is precipitated.

25. Method according to one of Claims 21 to 24, **characterized in that** the strong electrolyte used is a 10% strength potassium hydroxide solution or sodium hydroxide solution.

26. Method according to one of Claims 21 to 25, **characterized in that** the concentration of the strong electrolyte is maintained by adding a correspondingly concentrated solution of the same type.

27. Method according to one of Claims 21 to 26, **characterized in that** a cathode (34) made from titanium and/or an anode (36) made from stainless steel is used.

28. Method according to one of Claims 21 to 27, **characterized in that** a rod or a narrow metal sheet is used as cathode (34) and/or a metal sheet is used as anode (36).

29. Method according to one of Claims 21 to 28, **characterized in that** the current density is 5-20 A/dm².

30. Method according to one of Claims 21 to 29, **characterized in that** the precious metals are precipitated in powder form.

31. Method according to one of Claims 21 to 30, **characterized in that** the precipitation takes place continuously.

32. Method according to one of Claims 21 to 31, **characterized in that** the oxidation of the alkali metal cyanide solution, the removal of the precious metals and the precipitation take place in a closed circuit.

33. Method according to one of Claims 21 to 32, **characterized in that** the method is operated continuously.

34. Method for electrolytically precipitating precious metals or precious metals and metallic impurities out of an alkali metal cyanide solution, in which the alkali metal cyanide solution is passed through the cathode space (28) of an electrolysis cell (26), which is separated from the associated anode space (30), which is filled with a strong electrolyte, by a cation exchange membrane (32), **characterized in that** a cation exchange membrane (32) coated with precious metal is used.

35. Method according to Claim 34, **characterized in that** a cation exchange membrane (32) coated with gold is used.

36. Method according to Claim 34 or 35, **characterized in that** gold, silver and/or palladium is precipitated.

37. Method according to one of Claims 34 to 36, **characterized in that** the strong electrolyte used is a 10% strength potassium hydroxide solution or sodium hydroxide solution.

38. Method according to one of Claims 34 to 37, **characterized in that** the concentration of the strong electrolyte is maintained by adding a correspondingly concentrated solution of the same type.

39. Method according to one of Claims 34 to 38, **characterized in that** a cathode (34) made from titanium and/or an anode (36) made from stainless steel is used.

40. Method according to one of Claims 34 to 39, **characterized in that** a rod or a narrow metal sheet is used as cathode (34) and/or a metal sheet is used as anode (36).

41. Method according to one of Claims 34 to 40, **characterized in that** the current density is 5-20 A/dm².

42. Method according to one of Claims 34 to 41, **characterized in that** the precious metals are precipitated in powder form.

43. Method according to one of Claims 34 to 42, **characterized in that** the precipitation takes place continuously.

44. Method for regenerating a salt-containing alkali metal cyanide solution which comprises at least one nitroaromatic compound for the purpose of removing precious metals from surface-coated material, **characterized in that** the alkali metal cyanide solution is electrolytically oxidized in the anode space (12) of at least one electrolysis cell (10), which is separated from the associated cathode space (14), which is filled with a strong electrolyte, by a cation exchange membrane (16).

45. Method according to Claim 44, **characterized in that** the strong electrolyte used is a 10% strength potassium hydroxide solution or sodium hydroxide solution.

46. Method according to Claim 44 or 45, **characterized in that** an anode (18) made from platinum and/or a cathode (20) made from stainless steel is used.

47. Method according to one of Claims 44 to 46, **characterized in that** the current density is 5-50 A/dm².

48. Method according to Claim 47, **characterized in that** the current density is 15-30 A/dm².

49. Method according to one of Claims 44 to 48, **characterized in that** the alkali metal cyanide solution is passed through the anode space (12) of the electrolysis cell (10) at a flow rate of 1-3 l/min.

50. Method according to Claim 44, **characterized in that** the precious metals or precious metals and impurities dissolved in the alkali metal cyanide solution are electrolytically precipitated by a method in which the alkali metal cyanide solution is passed through the cathode space (28) of an electrolysis cell (26), which is separated from the associated anode space (30), which is filled with a strong electrolyte, by a cation exchange membrane (32).

51. Method according to Claim 50, **characterized in that** a cation exchange membrane (32) coated with precious metal is used.

52. Method according to Claim 51, **characterized in that** the precious metal comprises gold.

53. Method according to Claim 51 or 52, **characterized in that** gold, silver and/or palladium is precipitated.

54. Method according to one of Claims 50 to 53, **characterized in that** the strong electrolyte used is a 10% strength potassium hydroxide solution or sodium hydroxide solution.

55. Method according to one of Claims 50 to 54, **characterized in that** the concentration of the strong electrolyte is maintained by adding a correspondingly concentrated solution of the same type.

56. Method according to one of Claims 50 to 55, **characterized in that** a cathode (34) made from titanium and/or an anode (36) made from stainless steel is used.

57. Method according to one of Claims 50 to 56, **characterized in that** a rod or a narrow metal sheet is used as cathode (34) and/or a metal sheet is used as anode (36).

58. Method according to one of Claims 50 to 57, **characterized in that** the current density is 5-20 A/dm².

59. Method according to one of Claims 50 to 58, **characterized in that** the precious metals are precipitated in powder form.

60. Method according to one of Claims 50 to 59, **characterized in that** the precipitation takes place continuously.

## Revendications

1. Procédé pour séparer des couches de métaux nobles de matériaux ainsi revêtus par dissolution des métaux nobles dans une solution saline de cyanure de métal alcalin contenant un agent d'oxydation, **caractérisé en ce que** la solution de cyanure de métal alcalin est réoxydée par voie électrolytique aux fins de récupération et/ou de régénération de l'agent d'oxydation.

2. Procédé selon la revendication 1, **caractérisé en ce que** la solution de cyanure de métal alcalin comprend au moins un sulfate de métal alcalin, un métaborate de métal alcalin et/ou un aromatique nitré.

3. Procédé selon la revendication 2, **caractérisé en ce que** la solution de cyanure de métal alcalin contient de 10 à 60 g/l de cyanure de métal alcalin et de 8 à 25 g/l de au moins un sulfate de métal alcalin, métaborate de métal alcalin et/ou aromatique nitré.

4. Procédé selon la revendication 3, **caractérisé en ce que** la solution de cyanure de métal alcalin contient de 10 à 20 g/l de cyanure de métal alcalin.

5. Procédé selon l'une quelconque des revendications 2 à 4, **caractérisé en ce que** le au moins un aromatique nitré comprend de l'acide nitrobenzoïque, de l'acide nitrobenzène-sulfonique, du nitrochlorobenzène, de la nitroaniline, du nitrophénol, de l'acide nitrophtalique ou de l'acide nitrotoluène-sulfonique.

6. Procédé selon l'une quelconque des revendications qui précèdent, **caractérisé en ce que** les composés de métal alcalin comprennent des composés de sodium ou de potassium.

7. Procédé selon l'une quelconque des revendications qui précèdent, **caractérisé en ce que** les couches de métal noble comprennent de l'or, de l'argent et/ou du palladium ou des alliages correspondants.

8. Procédé selon l'une quelconque des revendications qui précèdent, **caractérisé par** une séparation sélective des couches de métal noble.

9. Procédé selon la revendication 8, **caractérisé en ce que** les couches d'or et de palladium sont séparées de manière sélective, le séparation étant contrôlée via la durée de traitement, la température de traitement et la composition de la solution de cyanure de métal alcalin.

10. Procédé selon la revendication 9, **caractérisé en ce que** l'or est séparé du palladium de manière sélective dans une solution comprenant 10 g/l de KCN et 10 g/l d'un composé aromatique nitré.

11. Procédé selon la revendication 8, **caractérisé en ce que** l'or est sélectivement séparé de l'argent dans une solution de cyanure de métal alcalin avec de l'or, du cuivre et/ou du nickel sous forme de complexe cyano.

12. Procédé selon l'une quelconque des revendications qui précèdent, **caractérisé en ce que** la température de la solution de cyanure de métal alcalin est de 20 à 30°C.

13. Procédé selon l'une quelconque des revendications qui précèdent, **caractérisé en ce que** le pH de la solution de cyanure de métal alcalin est ≥ 11.

14. Procédé selon l'une quelconque des revendications qui précèdent, **caractérisé en ce que** la teneur en cyanure de la solution de cyanure de métal alcalin est maintenue par apport de cyanure de métal alcalin.

15. Procédé selon l'une quelconque des revendications qui précèdent, **caractérisé en ce que** la réoxydation a lieu dans le compartiment anodique (12) d'au moins une cellule d'électrolyse (10), qui est séparé du compartiment cathodique (14) correspondant, lequel est rempli d'un électrolyte fort, par une membrane échangeuse de cations (16).

16. Procédé selon la revendication 15, **caractérisé en ce que** l'on utilise comme électrolyte fort de la soude caustique ou de la potasse caustique à 10%.

17. Procédé selon la revendication 15 ou 16, **caractérisé en ce que** l'on utilise une anode (18) en platine et/ou une cathode (20) en acier inoxydable.

18. Procédé selon l'une quelconque des revendications 15 à 17, **caractérisé en ce que** la densité de courant est de 5 à 50 A/dm².

19. Procédé selon la revendication 18, **caractérisé en ce que** la densité de courant est de 15 à 30 A/dm².

20. Procédé selon l'une quelconque des revendications 15 à 19, **caractérisé en ce que** la solution de cyanure de métal alcalin est amenée dans la cellule d'électrolyse (10) via le compartiment anodique (12) avec un débit de 1 à 3 l/minute.

21. Procédé selon l'une quelconque des revendications qui précèdent, **caractérisé en ce que** les métaux nobles ou les métaux nobles et les impuretés métalliques dissous dans la solution de cyanure de métal alcalin sont séparés par un processus électrolytique, dans lequel la solution de cyanure de métal alcalin est amenée à une cellule d'électrolyse (26) via le compartiment cathodique (28) qui est séparé du compartiment anodique correspondant (30), lequel est rempli d'un électrolyte fort, par une membrane échangeuse de cations (32).

22. Procédé selon la revendication 21, **caractérisé en ce que** l'on utilise une membrane échangeuse de cations (32) revêtue de métal noble.

23. Procédé selon la revendication 22, **caractérisé en ce que** le métal noble comprend de l'or.

24. Procédé selon l'une quelconque des revendications 21 à 23, **caractérisé en ce que** l'on dépose de l'or, de l'argent et/ou du palladium.

25. Procédé selon l'une quelconque des revendications 21 à 24, **caractérisé en ce que** l'on utilise comme électrolyte fort de la soude caustique ou de la potasse caustique à 10%.

26. Procédé selon l'une quelconque des revendications 21 à 25, **caractérisé en ce que** la concentration de l'électrolyte fort est maintenue par apport d'une solution du même type et de concentration correspondante.

27. Procédé selon l'une quelconque des revendications 21 à 26, **caractérisé en ce que** l'on utilise une cathode (34) en titane et/ou une anode (36) en acier inoxydable.

28. Procédé selon l'une quelconque des revendications 21 à 27, **caractérisé en ce que** l'on utilise comme cathode (34) une barre ou une tôle étroite et/ou une tôle comme anode (36).

29. Procédé selon l'une quelconque des revendications 21 à 28, **caractérisé en ce que** la densité de courant est de 5 à 20 A/dm².

30. Procédé selon l'une quelconque des revendications 21 à 29, **caractérisé en ce que** les métaux nobles sont déposés sous forme de poudre.

31. Procédé selon l'une quelconque des revendications 21 à 30, **caractérisé en ce que** le dépôt est entrepris en continu.

32. Procédé selon l'une quelconque des revendications 21 à 31, **caractérisé en ce que** la réoxydation de la solution de cyanure de métal alcalin, la séparation des métaux nobles et le dépôt sont entrepris en circuit fermé.

33. Procédé selon l'une quelconque des revendications 21 à 32, **caractérisé en ce que** le procédé est conduit en mode continu.

34. Procédé de dépôt électrolytique de métaux nobles ou de métaux nobles et d'impuretés métalliques à partir d'une solution de cyanure de métal alcalin, dans lequel la solution de cyanure de métal alcalin est amenée via le compartiment cathodique (28) à une cellule d'électrolyse (26), qui est séparée du compartiment cathodique correspondant (30), lequel est rempli d'un électrolyte fort, par une membrane échangeuse de cations (32), **caractérisé en ce que** l'on utilise une membrane échangeuse de cations (32) revêtue de métal noble.

35. Procédé selon la revendication 34,
**caractérisé en ce que** l'on utilise une membrane échangeuse de cations (32) revêtue d'or.

36. Procédé selon la revendication 34 ou 35, **caractérisé en ce que** l'on dépose de l'or, de l'argent et/ou du palladium.

37. Procédé selon l'une quelconque des revendications 34 à 36, **caractérisé en ce que** l'on utilise comme électrolyte fort de la soude caustique ou de la potasse caustique à 10%.

38. Procédé selon l'une quelconque des revendications 34 à 37, **caractérisé en ce que** la concentration de l'électrolyte fort est maintenue par apport d'une solution du même type et de concentration correspondante.

39. Procédé selon l'une quelconque des revendications 34 à 38, **caractérisé en ce que** l'on utilise une cathode (34) en titane et/ou une anode (36) en acier inoxydable.

40. Procédé selon l'une quelconque des revendications 34 à 39, **caractérisé en ce que** l'on utilise comme cathode (34) une barre ou une tôle étroite et/ou une tôle comme anode (36).

41. Procédé selon l'une quelconque des revendications 34 à 40, **caractérisé en ce que** la densité de courant est de 5 à 20 A/dm².

42. Procédé selon l'une quelconque des revendications 34 à 41, **caractérisé en ce que** les métaux nobles sont déposés sous forme de poudre.

43. Procédé selon l'une quelconque des revendications 34 à 42, **caractérisé en ce que** le dépôt est entrepris en continu.

44. Procédé de régénération d'une solution saline de cyanure de métal alcalin contenant au moins un composé aromatique nitré pour séparer des métaux nobles d'un matériau ainsi revêtu en surface, **caractérisé en ce que** la solution de cyanure de métal alcalin est réoxydée par voie électrolytique via le compartiment anodique (12) d'au moins une cellule d'électrolyse (10), qui est séparé du compartiment cathodique correspondant (14), lequel est rempli d'un électrolyte fort, par une membrane échangeuse de cations (16).

45. Procédé selon la revendication 44, **caractérisé en ce que** l'on utilise comme électrolyte fort de la soude caustique ou de la potasse caustique à 10%.

46. Procédé selon la revendication 44 ou 45, **caractérisé en ce que** l'on utilise une anode (18) en platine et/ou une cathode (20) en acier inoxydable.

47. Procédé selon l'une quelconque des revendications 44 à 46, **caractérisé en ce que** la densité de courant est de 5 à 50 A/dm².

48. Procédé selon la revendication 47, **caractérisé en ce que** la densité de courant est de 15 à 30 A/dm².

49. Procédé selon l'une quelconque des revendications 44 à 48, **caractérisé en ce que** la solution de cyanure de métal alcalin est amenée dans la cellule d'électrolyse (10) via le compartiment anodique (12) avec un débit de 1 à 3 l/minute.

50. Procédé selon la revendication 44, **caractérisé en ce que** les métaux nobles ou les métaux nobles et les impuretés dissous dans la solution de cyanure de métal alcalin sont déposés par un processus électrolytique, dans lequel la solution de cyanure de métal alcalin est amenée à une cellule d'électrolyse (26) via le compartiment cathodique (28) qui est séparé du compartiment anodique correspondant (30), lequel est rempli d'un électrolyte fort, par une membrane échangeuse de cations (32).

51. Procédé selon la revendication 50, **caractérisé en ce que** l'on utilise une membrane échangeuse de cations (32) revêtue de métal noble.

52. Procédé selon la revendication 51, **caractérisé en ce que** le métal noble comprend de l'or.

53. Procédé selon la revendication 51 ou 52, **caractérisé en ce que** l'on dépose de l'or, de l'argent et/ou du palladium.

54. Procédé selon l'une quelconque des revendications 50 à 53, **caractérisé en ce que** l'on utilise comme électrolyte fort de la soude caustique ou de la potasse caustique à 10%.

55. Procédé selon l'une quelconque des revendications 50 à 54, **caractérisé en ce que** la concentration de l'électrolyte fort est maintenue par apport d'une solution du même type et de concentration correspondante.

56. Procédé selon l'une quelconque des revendications 50 à 55, **caractérisé en ce que** l'on utilise une cathode (34) en titane et/ou une anode (36) en acier inoxydable.

57. Procédé selon l'une quelconque des revendications 50 à 56, **caractérisé en ce que** l'on utilise comme cathode (34) une barre ou une tôle étroite et/ou une tôle comme anode (36).

58. Procédé selon l'une quelconque des revendications 50 à 57, **caractérisé en ce que** la densité de courant est de 5 à 20 A/dm².

59. Procédé selon l'une quelconque des revendications 50 à 58, **caractérisé en ce que** les métaux nobles sont déposés sous forme de poudre.

60. Procédé selon l'une quelconque des revendications 50 à 59, **caractérisé en ce que** le dépôt est entrepris en continu.
